# EUROPEAN PATENT SPECIFICATION

(11) **EP 4 431 884 B1**
(45) Date of publication and mention of the grant of the patent: **21.01.2026**
(21) Application number: 24160393.5
(22) Date of filing: 28.02.2024
(51) Int. Cl.: G01G 19/393

(54) **CONVEYING APPARATUS**
FÖRDERVORRICHTUNG
APPAREIL DE TRANSPORT

(30) Priority: 15.03.2023 JP 2023041386
(43) Date of publication of application: 18.09.2024
(73) Proprietor: Ishida Co., Ltd., Kyoto-shi Kyoto 606-8392 (JP)
(72) Inventor: NISHI, Michio, Ritto-shi, Shiga, 520-3026 (JP); KISHIKAWA, Mikio, Ritto-shi, Shiga, 520-3026 (JP); KAGEYAMA, Toshiharu, Ritto-shi, Shiga, 520-3026 (JP)
(74) Representative: Gill Jennings & Every LLP

(56) References cited:
- US-A- 5 270 495
- US-B2- 10 962 403

## Description

### TECHNICAL FIELD

The present invention relates to a conveying apparatus.

### BACKGROUND ART

Conventionally, known has been a combination weighing apparatus in which a radial feeder is controlled based on observation of the fall of an article, from the leading end of a trough of the radial feeder, with a photoelectric sensor. In the combination weighing apparatus, the photoelectric sensor is disposed above the trough because of its function.

### CITATION LIST

### PATENT LITERATURE

Patent Literature 1: JP 2020-094946 A
US 5 270 495 A discloses a combination weighing machine comprising a sensor for detecting pieces of product as they are loading into an associated accumulator from a feeder.

### SUMMARY OF INVENTION

However, such a combination weighing apparatus including a photoelectric sensor disposed above a trough has the photoelectric sensor disposed above an article being conveyed. Thus, deterioration in hygiene or contamination with foreign matter is highly likely to occur. Furthermore, in particular, for perishables, such as raw chicken, to be weighed, as a problem, required is a structure for inhibiting contamination with foreign matter.

Thus, the present invention has been made in consideration of the problems and an object of the present invention is to provide a conveying apparatus enabling observation of the fall of an article from a radial feeder, with maximum inhibition of deterioration in hygiene and contamination with foreign matter.

A first aspect of the present invention is summarized as a conveying apparatus including: a distributor (10); a conveyor (20); a driver (30); and a detector (40), characterized in that the distributor (10) distributes articles from outside; the conveyor (20) receives an article from among the articles distributed by the distributor (10) and convey the article downstream; the driver (30) drives the conveyor (20); the detector (40) is disposed below a conveyance face of the distributor (10) or a conveyance face of the conveyor (20); and the detector (40) detects the article dropped from the conveyor (20), based on light emitted between the conveyor (20) and the driver (30).

The conveying apparatus further comprises a fixed member (70), characterized in that
the fixed member (70) is disposed between the conveyor (20) and the driver (30);
the fixed member (70) fastens the conveyor (20) and the driver (30); and
the fixed member (70) has a travel space (71) through which the light travels.

According to the present invention, it is possible to provide a conveying apparatus enabling observation of the fall of an article from a radial feeder, with maximum inhibition of deterioration in hygiene and contamination with foreign matter.

### BRIEF DESCRIPTION OF DRAWINGS

Fig. 1 is an explanatory view for an exemplary schematic entire configuration of a combination weighing apparatus (conveying apparatus) 1 according to an embodiment.
Fig. 2 is a perspective view of part of the combination weighing apparatus (conveying apparatus) 1 according to the embodiment.
Fig. 3 is a perspective view of an exemplary radial feeder (conveyor) 20 in the combination weighing apparatus (conveying apparatus) 1 according to the embodiment.
Fig. 4 illustrates the radial feeder (conveyor) 20 in Fig. 3 viewed in an X direction.
Fig. 5 is a sectional view taken along line A-A of Fig. 4.

### DESCRIPTION OF EMBODIMENTS

Embodiments of the present invention will be described below based on the drawings. Note that the drawings are schematic and thus the parts are different in dimensions or ratio from the realities. In addition, parts between each drawing may be different in dimensions or ratio. Furthermore, in the present specification and the drawings, constituents substantially identical in function or configuration are denoted with the same reference signs and thus duplicate description thereof will be omitted. In addition, any constituents not directly related to the present invention are not illustrated.

### (First Embodiment)

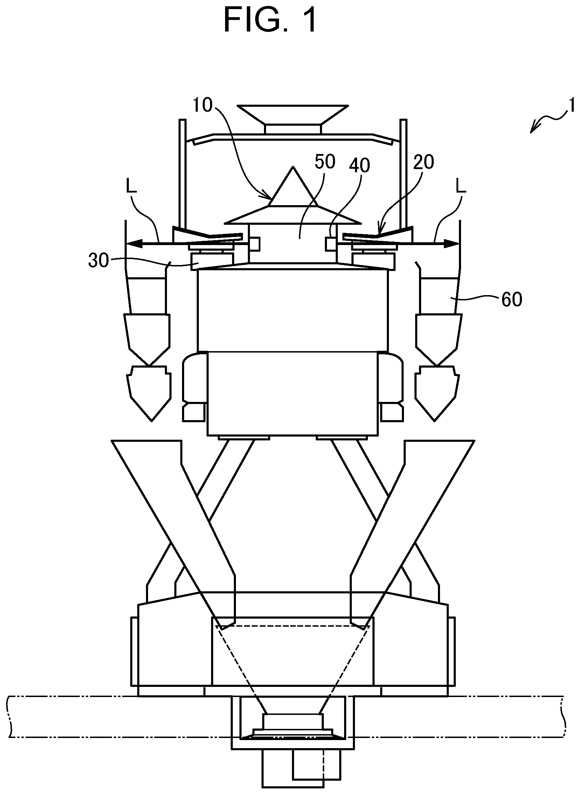

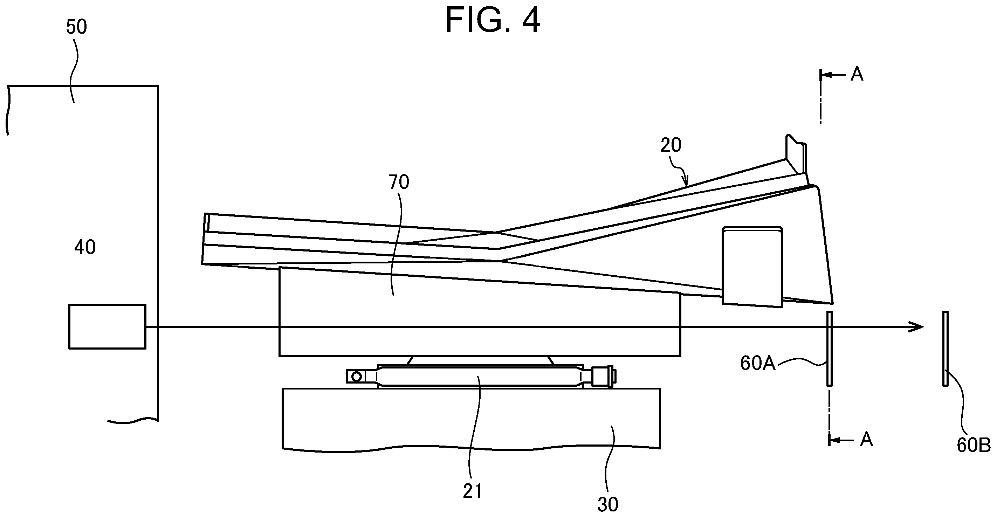

A conveying apparatus according to a first embodiment of the present invention will be described below with reference to Figs. 1 to 5. In the present embodiment, a combination weighing apparatus 1 will be described as an exemplary conveying apparatus. However, the present invention is not limited to this and thus can be applied to any other conveying apparatuses. For example, the present invention can be applied to a conveying apparatus that supplies articles to the combination weighing apparatus 1.

As illustrated in Fig. 1, the combination weighing apparatus 1 according to the present embodiment includes a distribution table 10, a radial feeder 20, a driver 30, a detector 40, a casing 50, a pool hopper 60, and a fixed member 70.

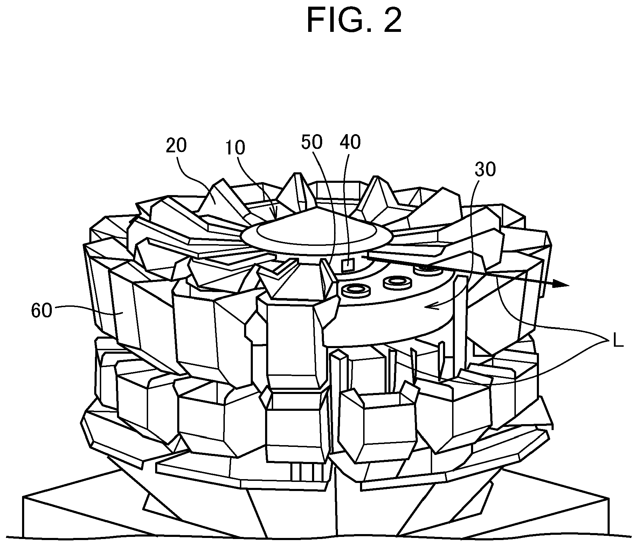

The distribution table 10 serves as a distributor that receives articles from outside and distributes the articles downstream. As illustrated in Figs. 1 and 2, the distribution table 10 is attached to the casing 50. Note that the casing 50 may house a motor that rotates the distribution table 10 or a vibrator that vibrates the distribution table 10.

The radial feeder 20 serves as a conveyor that receives an article from among the articles distributed by the distribution table 10 and conveys the article downstream. The radial feeder 20 may be of a type that conveys an article based on vibrations or may be of a type that conveys an article through a conveyor belt.

The driver 30 drives the radial feeder 20. For example, the driver 30 may be a vibrator that vibrates a vibration type of radial feeder 20 or may be a motor that drives a conveyor-belt type of radial feeder 20.

The detector 40 is disposed below the conveyance face of the distribution table 10 or the conveyance face of the radial feeder 20. For example, as illustrated in Figs. 1 and 2, the detector 40 may be disposed inside the casing 50 disposed below the conveyance face of the distribution table 10. Alternatively, the detector 40 may be disposed below the conveyance face of the radial feeder 20 outside the casing 50.

As illustrated in Figs. 1, 2, and 4, based on light L emitted between the radial feeder 20 and the driver 30, the detector 40 detects an article that falls from the radial feeder 20 to the pool hopper 60. For example, the detector 40 serves as a time-of-flight sensor that emits light, such as a laser beam or infrared light, and measures the time taken by the light to return back after being reflected by an article to detect the article.

The detector 40 may be a photoelectric sensor including a light source that emits light and a photoreceiver that receives the light. In this case, the detector 40 detects the article, based on the light-receiving state of the photoreceiver.

According to such a configuration, the detector 40 does not require disposing above an article being conveyed, so that deterioration in hygiene and contamination with foreign matter can be inhibited maximum. According to such a configuration, the combination weighing apparatus 1 enables observation of an article that falls from the radial feeder 20, different from a screw type of radial feeder, to the pool hopper 60.

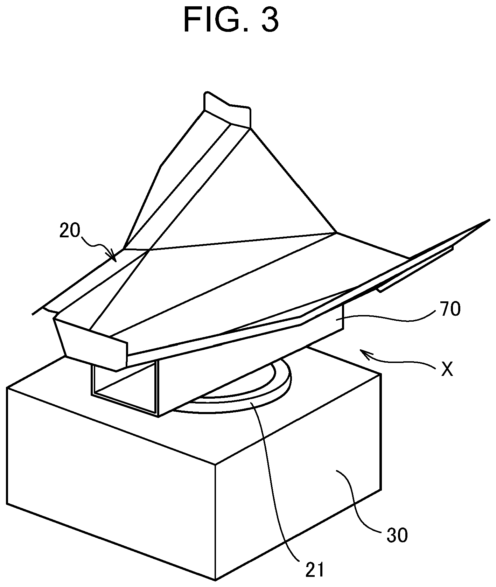

As illustrated in Figs. 3 to 5, the fixed member 70 is disposed between the radial feeder 20 and the driver 30 and fastens the radial feeder 20 and the driver 30.

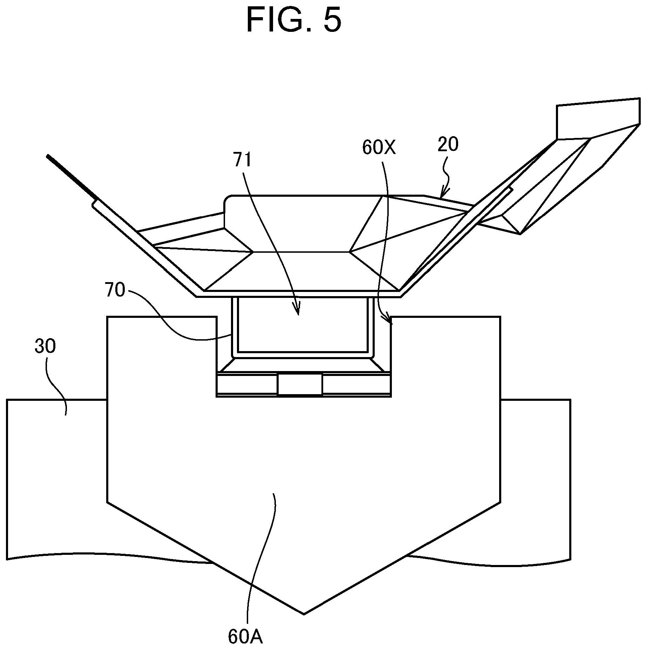

As illustrated in Fig. 5, the fixed member 70 is provided with a travel space 71 through which the light L described above travels. For example, the fixed member 70 may be a hollow polygonal pillar-shaped member. In the example of Fig. 5, the fixed member 70 is a hollow quadrangular pillar-shaped member. The height of the fixed member 70 may be changed depending on the characteristics of a photoelectric sensor serving as the detector 40. Furthermore, in a case where the radial feeder 20 is a radial feeder that conveys an article based on vibrations, the travel space 71 of the pillar-shaped member is adjusted such that the light L is not blocked even when the pillar-shaped member vibrates due to such vibrations.

According to such a configuration, although the fixed member 70 is disposed below the radial feeder 20, the light L from the detector 40 can reach the end on the downstream side of the radial feeder 20.

Note that, as illustrated in Fig. 5, when viewed in the direction in which the light L is emitted, the fixed member 70 may be U-shaped with an upper opening.

As illustrated in Fig. 5, the pool hopper 60 has an inner wall 60A provided with a cutout 60X. The cutout 60X has a shape corresponding to the sectional shape of the fixed member 70 such that the light L having traveled through the travel space 71 of the fixed member 70 can reach an outer wall 60B that the pool hopper 60 has. Note that the outer wall 60B of the pool hopper 60 is provided with no cutout.

The conveying apparatus 1 according to the present embodiment enables observation of the fall of an article from the radial feeder 20, with maximum inhibition of deterioration in hygiene and contamination with foreign matter.

Some embodiments of the present invention have been described above. Instead of rotation of the distribution table 11, the distribution table 11 may repeat an arc motion and an up-and-down motion in a spiral manner within a certain angle range. The universal joint 40 has the spherical sliding bearing 41 as a bearing. Instead of the universal joint 40, a universal joint having two orthogonal shafts may be adopted. Instead of the spherical sliding bearing 41 of the rod end 31, a bearing that bears a radial load may bear the second support shaft 53 such that the rod end 31 itself rotates freely around the vertical axis.

### Reference Signs List

- 1: Conveying apparatus (combination weighing apparatus)
- 10: Distributor (distribution table)
- 20: Conveyor (radial feeder)
- 30: Driver
- 40: Detector
- 50: Casing
- 60: Pool hopper
- 70: Fixed member
- 71: Travel space

## Claims

1. A conveying apparatus comprising:
a distributor (10);
a conveyor (20);
a driver (30); and
a detector (40), wherein
the distributor (10) distributes articles from outside;
the conveyor (20) receives an article from among the articles distributed by the distributor (10) and convey the article downstream;
the driver (30) drives the conveyor (20);
the detector (40) is disposed below a conveyance face of the distributor (10) or a conveyance face of the conveyor (20); and
the detector (40) detects the article dropped from the conveyor (20), based on light emitted between the conveyor (20) and the driver (30);
**characterized in that**
the conveying apparatus further comprises a fixed member (70), wherein
the fixed member (70) is disposed between the conveyor (20) and the driver (30);
the fixed member (70) fastens the conveyor (20) and the driver (30); and
the fixed member (70) has a travel space (71) through which the light travels.

2. The conveying apparatus according to claim 1,
**characterized in that**
the driver (30) includes a vibrator that vibrates the conveyor (20).

3. The conveying apparatus according to claim 1 or claim 2, **characterized in that**
the fixed member (70) has an upper opening and is U-shaped in a case where the fixed member (70) is viewed in a direction in which the light is emitted.

## Patentansprüche

1. Fördervorrichtung, die aufweist:
einen Verteiler (10);
einen Förderer (20);
einen Treiber (30); und
einen Detektor (40),
wobei
der Verteiler (10) Artikel von außen verteilt;
der Förderer (20) einen Artikel von den durch den Verteiler (10) verteilten Artikeln empfängt und den Artikel stromabwärts befördert;
der Treiber (30) den Förderer (20) antreibt;
der Detektor (40) unter einer Förderfläche des Verteilers (10) oder einer Förderfläche des Förderers (20) angeordnet ist; und
der Detektor (40) den von dem Förderer (20) abgeworfenen Artikel basierend auf Licht erkennt, das zwischen dem Förderer (20) und dem Treiber (30) emittiert wird;
**dadurch gekennzeichnet, dass**
die Fördervorrichtung ferner ein festes Element (70) aufweist,
wobei
das feste Element (70) zwischen dem Förderer (20) und dem Treiber (30) angeordnet ist;
das feste Element (70) den Förderer (20) und den Treiber (30) befestigt; und
das feste Element (70) einen Bewegungsraum (71) aufweist, durch den sich das Licht bewegt.

2. Fördervorrichtung nach Anspruch 1, **dadurch gekennzeichnet, dass**
der Treiber (30) einen Rüttler aufweist, der den Förderer (20) in Schwingungen versetzt.

3. Fördervorrichtung nach Anspruch 1 oder Anspruch 2, **dadurch gekennzeichnet, dass**
das feste Element (70) eine obere Öffnung aufweist und U-förmig ist, wenn das feste Element (70) in einer Richtung betrachtet wird, in der das Licht emittiert wird.

## Revendications

1. Appareil de transport comprenant :
un distributeur (10) ;
un convoyeur (20) ;
un pilote (30) ; et
un détecteur (40),
le distributeur (10) distribuant des articles provenant de l'extérieur ;
le convoyeur (20) recevant un article parmi les articles distribués par le distributeur (10) et les transmettant en aval ;
le pilote (30) entraînant le convoyeur (20) ;
le détecteur (40) étant disposé sous une face de transport du distributeur (10) ou une face de transport du convoyeur (20) ; et
le détecteur (40) détectant l'article lâché par le convoyeur (20) d'après la lumière émise entre le convoyeur (20) et le pilote (30) ;
**caractérisé en ce que**
l'appareil de transport comprend en outre un élément fixe (70),
l'élément fixe (70) étant disposé entre le convoyeur (20) et le pilote (30) ;
l'élément fixe (70) fixant le convoyeur (20) et le pilote (30) ; et
l'élément fixe (70) possédant un espace de déplacement (71) à travers lequel se déplace la lumière.

2. Appareil de transport selon la revendication 1,
**caractérisé en ce que**
le pilote (30) comprend un vibreur faisant vibrer le convoyeur (20).

3. Appareil de transport selon la revendication 1 ou la revendication 2, **caractérisé en ce que**
l'élément fixe (70) possède une ouverture supérieure et étant en forme de U lorsque l'élément fixe (70) est vu dans la direction dans laquelle la lumière est émise.
